# EUROPEAN PATENT SPECIFICATION

(11) **EP 2 445 707 B1**
(45) Date of publication and mention of the grant of the patent: **30.10.2013**
(21) Application number: 10731829.7
(22) Date of filing: 22.06.2010
(51) Int. Cl.: B29D 30/14, B29D 30/28

(54) **ASSEMBLY OF DEVICES AND METHOD OF MANUFACTURING A GREEN RADIAL PNEUMATIC TYRE**
ANORDNUNG VON VORRICHTUNGEN UND VERFAHREN ZUR HERSTELLUNG EINES RADIALEN LUFTREIFENROHLINGS
ENSEMBLE DE DISPOSITIFS ET PROCÉDÉ POUR FABRIQUER UN PNEUMATIQUE RADIAL NON VULCANISÉ

(30) Priority: 23.06.2009 NL 2003069; 23.06.2009 US 219440 P
(43) Date of publication of application: 02.05.2012
(73) Proprietor: VMI Holland B.V., 8161 RK Epe (NL)
(72) Inventor: GROLLEMAN, Henk-Jan, NL-6961 VC Eerbeek (NL)
(74) Representative: Peters, Sebastian Martinus
(86) International application number: PCT/NL2010/050385
(87) International publication number: WO 2010/151122

(56) References cited:
- EP-A1- 1 754 592
- EP-A2- 0 429 286
- EP-A2- 0 627 302
- WO-A1-2009/150934
- DE-A1- 1 579 161
- GB-A- 108 965
- US-A- 1 849 138
- US-A- 2 362 180
- US-A- 3 850 728

## Description

### BACKGROUND OF THE INVENTION

The invention relates to an assembly for manufacturing a green radial pneumatic tyre, which assembly is provided with a rotatable carcass drum for carrying a carcass with a belt/tread package for the radial pneumatic tyre and with a stitching roller unit having at least one rotatable stitching roller having a stitching running surface that can be placed against the carcass and a displacement device for moving the roller radially from or towards the carcass with the belt/tread package.

The invention furthermore relates to a method for manufacturing a green radial pneumatic tyre.

Such an assembly and method are known from European patent 0.627.302. In the known assembly when manufacturing a radial pneumatic tyre, the required pressing together of the belt/tread package and a carcass with beads and side walls is realised by a stitching roller unit having at least one pair of dynamic rollers following the tyre contour that are movable in longitudinal direction with respect to the carcass drum, or by a pair of dynamic rollers following the tyre contour for stitching together the edge strips of the belt/tread package and the carcass with the side walls and at least one static roller for stitching together the central parts of the belt/tread package and the carcass.

The stitching roller unit is used in the tyre building process, particularly after the side has been turned up and/or the belt package including tread has been arranged on the carcass of the tyre to be manufactured.

The stitching roller stitches said rubber components to remove air inclusions. Air inclusions are disadvantageous or even disastrous, to the quality of the tyre. The rollers are positioned so as to rotate freely and are pressed against the already rotating tyre with a certain force. After said rollers have been brought into contact with the rotating tyre, the rollers start taking over the rotary motion of the rotating tyre.

A drawback of the known stitching roller unit is that due to the use of the rollers the rubber layers of the tyre that are reinforced with (steel) cords are deformed. That means that the mutual distance of the cords can be disrupted, and/or the regular course of the cords is disrupted, and/or the pattern of the course of the cords is interrupted. In practice this phenomenon is called "waving".

An apparatus for the manufacture of a tire, comprising a rotatable drum for carrying a tire or a tire carcass, and a stitching roller rotated by a suitable drive and controlled by a suitable control unit is disclosed in document US 2362180 - A.

A similar apparatus is also disclosed in document US 1849138 - A.

Other apparatuses disclosing freely rotatable stitching rollers combined with tire building drums or supports, which are driven by suitable motors and controlled by suitable control units are disclosed in documents DE 1579161 - A, EP 1754592 - A, US 3850728 - A and EP 429286 - A.

It is among others an object of the present invention to provide an assembly and a method for manufacturing a green radial pneumatic tyre wherein the occurrence of "waving" is at least reduced.

### SUMMARY OF THE INVENTION

According to a first aspect of the invention as defined in claim 1, an assembly of the kind mentioned in the preamble is for that purpose characterised in that the stitching roller unit is provided with an individual drive mechanism for rotatingly driving the stitching running surface of the stitching roller, at least without the stitching roller contacting the belt/tread package. The stitching roller according to the invention is provided with an individual drive mechanism for rotatingly driving the stitching running surface of the stitching roller, particularly before the stitching roller contacts the belt/tread package. In this way the stitching running surface can be brought into rotation prior to it contacting the belt/tread package of the carcass. Because the roller is pressed against the rotating carcass with an already rotating stitching surface, particularly when the stitching running surface and the carcass in the contact position run in the same direction, it has turned out that the deformation of the rubber layers of the tyre reinforced with (steel) cords can be reduced, as a result of which the "waving" can be reduced.

Furthermore the assembly according to the invention is provided with a control device for controlling a peripheral velocity of the stitching roller, and the assembly comprises measuring means for determining the drive torque for driving the rotatable carcass drum or a quantity derived therefrom, wherein the measuring means are adapted for giving a signal that is representative for the drive torque to the control device. As a result the peripheral velocity of the stitching roller and/or the peripheral velocity of the engagement position or contact position on the carcass and/or tread can be controlled depending on a drive torque for driving the carcass drum and be set such that the underlying cord layers are not deformed or hardly so, as a result of which the "waving" phenomenon is strongly reduced or does not even occur at all anymore.

Preferred embodiments of the assembly are defined in the dependent claims 2 to 9.

In one embodiment the assembly comprises a speedometer for determining the peripheral velocity of an engagement position on the carcass and/or the control device is adapted for calculating the peripheral velocity of the engagement position on the carcass from the number of revolutions of the carcass drum and the distance of the engagement position from the axis of rotation of the carcass drum. With these data the control device can control the peripheral velocity of the stitching roller and/or the peripheral velocity of the engagement position or contact position on the carcass and/or tread substantially to the same value, prior to the stitching roller contacting the carcass and/or the belt/tread package.

In one embodiment the control device is adapted for controlling the peripheral velocity of the stitching roller depending on the signal that is representative for the drive torque. By means of this assembly a first drive torque can be determined without the stitching roller contacting the belt/tread package. Subsequently the stitching roller is placed against the belt/tread package and a second drive torque can be determined. The control device can now regulate the peripheral velocity of the stitching roller and/or the peripheral velocity of the carcass with belt/tread package such that the difference between the first and the second drive torque becomes minimal. As a result the extra rotation moment or drive torque caused by the stitching roller pressing against the belt/tread package is minimised, as a result of which the "waving" phenomenon is strongly reduced or does not even occur at all anymore.

In one embodiment the assembly comprises a servomotor for rotatingly driving the carcass drum. The servomotor can then be used in the known way as means for determining the rotation moment or drive torque that is necessary to drive the carcass drum.

In one embodiment the drive mechanism of the stitching roller unit comprises a servomotor for driving the stitching running surface, as a result of which the peripheral velocity of the stitching roller can be accurately set towards the peripheral velocity of the engagement position on the carcass.

In one embodiment the stitching roller is a dynamic roller following the tyre contour, which roller is movable in a longitudinal direction with respect to the carcass drum. Such a dynamic roller following the tyre contour can be moved in the longitudinal or axial as well as in radial direction with respect to the carcass drum for stitching the belt/tread package against the carcass with the beads and the side walls.

In one embodiment the control device is adapted for controlling a peripheral velocity of the stitching roller depending on the engagement position on the carcass with the belt/tread package. In that way the peripheral velocity of the stitching roller and/or the peripheral velocity of the engagement position or contact position on the carcass can be controlled depending on the axial or longitudinal movement of the stitching roller.

In one embodiment the stitching roller unit comprises one pair of dynamic stitching rollers following the tyre contour which rollers are movable in longitudinal direction with respect to the carcass drum, wherein each of both stitching rollers is provided with its individual drive mechanism. In that way the edge strips of the belt/tread package can be simultaneously stitched on both sides of the carcass. In one embodiment a static stitching roller, that means a roller that can exclusively be moved in radial direction for stitching the central parts of the belt/tread package and the carcass with side walls together, is furthermore provided.

In one embodiment the drive mechanism is spaced apart from the stitching roller, preferably at a side of the stitching roller that faces away from the carcass drum. In one embodiment the drive mechanism is operatively connected to the stitching roller by means of a transmission, preferably the transmission comprises a chain or belt transmission.

According to a second aspect the invention as defined in claim 10, provides a method for manufacturing a green radial pneumatic tyre, comprising the following steps:
arranging a carcass on a rotatable carcass drum;
arranging a belt/tread package on the carcass;
rotatingly driving the carcass drum with the carcass with the belt/tread package thereon;
moving a stitching roller unit with a rotatable stitching roller towards the carcass with the belt/tread package;
stitching the belt/tread package against the carcass by the stitching roller while simultaneously rotatingly driving the carcass drum;
wherein the stitching roller unit is provided with a drive mechanism for rotatingly driving a running surface of the stitching roller, wherein the stitching roller is rotatingly driven before the stitching roller contacts the belt/tread package, and
that a drive torque for driving the rotatable carcass drum or a quantity derived therefrom is determined, and a signal that is representative for the drive torque is given to a control device for controlling a peripheral velocity.

Preferred embodiments of the method are defined in the dependent claims 11 to 15.

In one embodiment the peripheral velocity of the rotatingly driven stitching roller is set depending on a peripheral velocity of an engagement position or contact position on the carcass with the belt/tread package, where the stitching roller is about to engage or engages. This takes place in particular before the stitching roller contacts the belt/tread package.

In one embodiment the control device directs the peripheral velocity of the stitching roller and/or the peripheral velocity of the carcass with belt/tread package, at least near the engagement position, to a substantially equal value.

In one embodiment a first drive torque is determined without the stitching roller contacting the belt/tread package, a second drive torque is determined when the stitching roller presses against the belt/tread package, wherein that the control device regulates the peripheral velocity of the stitching roller and/or the peripheral velocity of the carcass with belt/tread package such, at least during pressing the stitching roller against the belt/tread package, that the difference between the first and second drive torque becomes minimal.

In one embodiment the stitching roller is a dynamic roller following the tyre contour, which roller can be moved in an axial direction with respect to the carcass drum. In one embodiment the control device sets the peripheral velocity of the stitching roller depending on the axial movement of the stitching roller with respect to the carcass drum.

### SHORT DESCRIPTION OF THE DRAWINGS

The invention will be elucidated on the basis of a number of exemplary embodiments shown in the attached drawings, in which:
Figure 1 shows a schematic view of a stitching roller unit at a carcass drum with a carcass;
Figure 2 shows a schematic top view of a stitching roller unit according to the invention;
Figure 3 shows a schematic top view of figure 2, wherein the stitching rollers have swung round; and
Figure 4 schematically shows the movement range of one of the rollers of a pair of dynamic stitching rollers that follow the tyre contour.

### DETAILED DESCRIPTION OF THE DRAWINGS

When manufacturing a green radial pneumatic tyre use is made of a carcass drum 93 for building up or expanding thereon a carcass 92 with beads and side walls. After a belt/tread package is arranged on the carcass 92, the belt/tread package is pressed with adjustable force against the carcass 92 with the beads, the side walls and the belt/tread package by means of a stitching roller unit 1, while simultaneously rotating the carcass drum 93, so that they adhere to each other for forming the green radial pneumatic tyre that is subsequently ready for further processing.

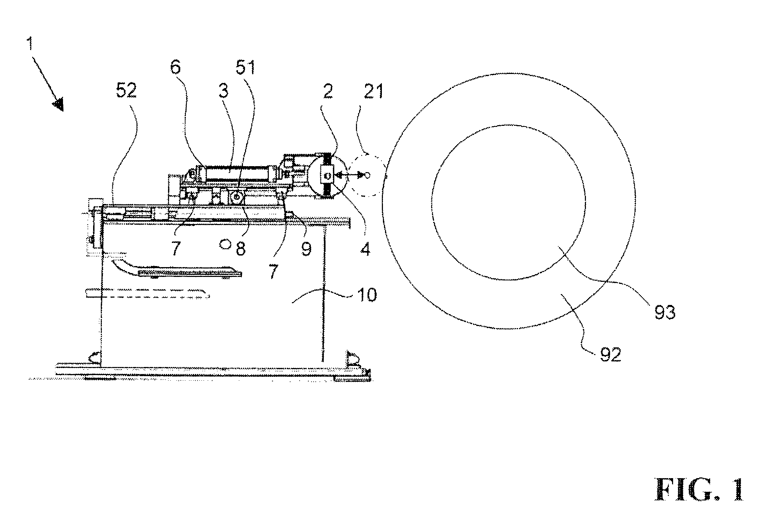

The stitching roller unit 1 can be formed by at least one stitching roller 2 as schematically shown in figure 1. By means of a cylinder 3 the stitching roller 2 is movable in the direction of the carcass drum 93 up into the position 21 pressing against the belt/tread package and indicated in dotted lines. The stitching roller 2 is then placed against the carcass 92 with adjustable force.

By means of the double-active stitching cylinder 3, the stitching roller 2 is retractable to the free position that is indicated in full lines.

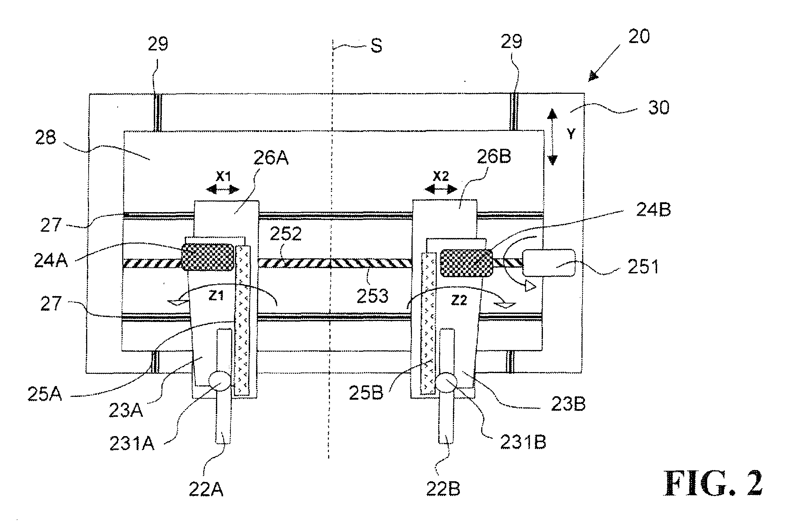

Furthermore the stitching roller 2 is provided with its individual drive mechanism 4 in the form of a motor. In the exemplary embodiment as shown in figure 1, the stitching roller 2 is directly placed on the driving shaft of the motor 4. In an alternative embodiment a transmission can be placed between the stitching roller 2 and the motor 4, as schematically shown in figure 2 and described in further detail below.

Furthermore the stitching roller unit 1 as shown in figure 1 is provided with a longitudinal drive 51 with which the stitching roller 2 is movable substantially in longitudinal direction with respect to the carcass drum 93, and with a radial drive 52 with which the stitching roller 2 is movable substantially in radial direction with respect to the carcass drum 93. In this exemplary embodiment said two drives 51, 52 provide a dynamic movement of the stitching roller 2 following the tyre contour.

In the exemplary embodiment of figure 1 the stitching roller 2 with its drive mechanism 4 and the cylinder 3 are placed on a first translation table 6. The first translation table 6 is placed on a second translation table 8 by means of two longitudinal guides 7. The second translation table 8 is placed on a support 10 by means of at least one radial guide 9. By regulating the peripheral velocity of the stitching running surface of the stitching roller 2 it can be achieved that the stitching running surface and an engagement position of the stitching roller 2 on the tyre 92 at least run substantially parallel.

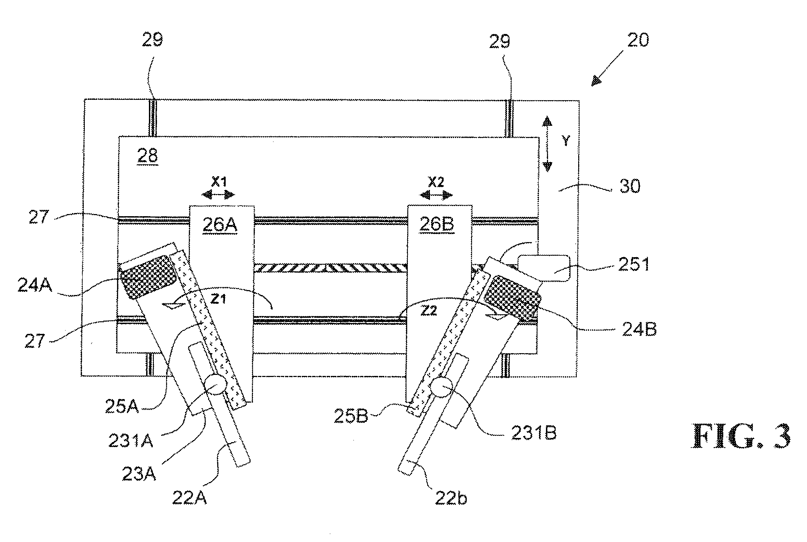

A second exemplary embodiment of a stitching roller unit 20 according to the invention is shown in the top views of figures 2 and 3. Said stitching roller unit 20 comprises a pair of dynamically movable stitching rollers 22A, 22B. Each stitching roller 22A, 22B is provided with an individual drive mechanism 24A, 24B. By means of a transmission, in this example a toothed belt 25A, 25B, the drive mechanism 24A, 24B is operationally connected to the stitching roller 22A, 22B. By using a toothed belt 25A, 25B and the like, the drive mechanism 24A, 24B can be spaced apart further from the stitching roller 22A, 22B. Particularly as shown in figures 2 and 3, the drive mechanism 24A, 24B is placed at a side of the stitching roller 22A, 22B corresponding with the drive mechanism 24A, 24B which side faces away from the carcass drum.

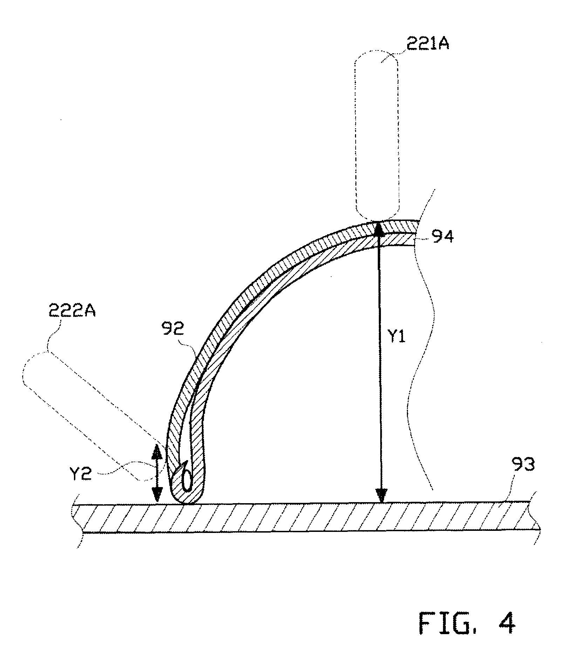

Each stitching roller 22A, 22B with its individual drive mechanism 24A, 24B is placed on its individual rotation table or centre support 23A, 23B, which around an axis of rotation 231 A, 231B is rotatably connected to an individual first translation table or stitcher table 26A, 26B. Due to this construction the stitching rollers 22A and 22B can at least be swung around or rotated Z1, Z2 between a first position as shown in figure 2, for stitching among others the tread of the green pneumatic tyre 92, 94 as schematically shown by stitching roller 221 A in figure 4, and a second position as shown in figure 3 for stitching the sides of the green pneumatic tyre 92, 94 as schematically shown by stitching roller 222A in figure 4.

Except that the swing angle Z1, Z2 at a longitudinal movement X1, X2 has to be adjusted for following the tyre contour, also the engagement position or contact point of the stitching roller 22A, 22B on the green pneumatic tyre 92 will come to be situated at a different distance y1 and y2 in figure 4, with respect to the carcass drum 93. In case of the number of revolutions of the carcass drum 93 remaining the same, the peripheral velocity at distance y1 will be greater than the peripheral velocity at distance y2. By regulating the peripheral velocity of the stitching running surface of the stitching rollers 22A, 22B it can be achieved that the stitching running surface and the engagement position of the stitching rollers on the tyre 92 run at least substantially parallel.

Both first translation tables or stitcher tables 26A and 26B are placed on a common second translation table or sub frame 28 by means of two longitudinal guides 27. Due to the longitudinal drive 251 the stitching rollers 22A, 22B are moveable substantially in longitudinal direction X1, X2 with respect to the carcass drum. As schematically shown in figure 2 the motor 251 drives a spindle that has a first part 252 for driving the first translation table 26A of the first stitching roller 22A and a second part 253 for driving the first translation table 26B of the second stitching roller 22B, wherein the pitch of the first part 252 is the opposite of the pitch of the second part 253. Preferably the size of the pitch of the first part 252 substantially equals the size of the pitch of the second part 253, as a result of which the first stitching roller 22A and the second stitching roller 22B are substantially symmetrically movable with respect to a plane a plane of symmetry S by driving the spindle by the motor 251.

The second translation table or the sub frame 28 is placed on the support or base frame 30 by means of two radial guides 29. The second translation table 28 is movable substantially in radial direction Y by means of a radial drive (not shown).

In this second exemplary embodiment the radial drive, the longitudinal drive 251 and the rotation drive of the rotation tables 23A, 23B provide a dynamic movement of the stitching rollers 22A, 22B that follows the tyre contour.

The drive mechanisms 4, 24A, 24B of the stitching rollers 2, 22A, 22B are provided with servomotors that are controlled via a control system (not shown). Preferably this control system is coupled to measuring means for determining the drive torque for driving the carcass drum.

When used, first a first value is determined for the drive torque for driving the carcass drum without a stitching roller 2, 22A, 22B contacting the carcass. Subsequently a stitching roller 2, 22A, 22B is driven by its individual motor 4, 24A, 24B and while rotating, is pressed against the carcass. As the stitching roller 2, 22A, 22B is pressed against the carcass and/or because the stitching roller 2, 22A, 22B is moved along the tyre contour, the value of the drive torque for driving the carcass drum may start deviating from the first value. The control system then regulates the motor 4, 24A, 24B of the stitching roller 2, 22A, 22B such that the value of the drive torque approaches the first value as close as possible.

The above description is included to illustrate the operation of preferred embodiments of the invention and not to limit the scope of the invention. Starting from the above explanation many variations that fall within the scope of the present invention will be evident to an expert.

Summarising the invention thus relates to an assembly and a method for manufacturing a green radial pneumatic tyre. The assembly is provided with a rotatable carcass drum for carrying a carcass with a belt/tread package for the radial pneumatic tyre and with a stitching roller unit having at least one rotatable stitching roller having a stitching running surface that can be placed against the carcass and a displacement device for moving the roller radially from or towards the carcass with the belt/tread package. The stitching roller unit is provided with an individual drive mechanism for rotatingly driving the stitching running surface of the stitching roller, at least without the stitching roller contacting the belt/tread package. The assembly is furthermore provided with a control device for controlling a peripheral velocity of the stitching roller, wherein the assembly comprises measuring means for determining a drive torque for driving the rotatable carcass drum or a quantity derived therefrom, and for giving a signal that is representative for the drive torque to the control device.

## Claims

1. Assembly for manufacturing a green radial pneumatic tyre, which assembly is provided with a rotatable carcass drum (93) for carrying a carcass (92) with a belt/tread package for the radial pneumatic tyre and with a stitching roller unit (1; 20) having at least one rotatable stitching roller (2; 22A, 22B) having a stitching running surface that can be placed against the carcass (92) and a displacement device (52; 28) for moving the roller (2; 22A, 22B) radially from or towards the carcass (92) with the belt/tread package, **characterised in that** the stitching roller unit (1; 20) is provided with an individual drive mechanism (4; 24A, 24B) for rotatingly driving the stitching running surface of the stitching roller (2; 22A, 22B), at least without the stitching roller (2; 22A, 22B) contacting the belt/tread package, wherein the assembly is provided with a control device for controlling a peripheral velocity of the stitching roller (2; 22A, 22B) and/or the peripheral velocity of the engagement position on the carcass (92) depending on a drive torque for driving the carcass drum (93), and wherein the assembly comprises measuring means for determining the drive torque for driving the rotatable carcass drum (93) or a quantity derived therefrom, and for giving a signal that is representative for the drive torque to the control device.

2. Assembly according to claim 1, **characterised in that** the control device is adapted for controlling the peripheral velocity of the stitching roller (2; 22A, 22B) depending on the peripheral velocity of the carcass (92) with the belt/tread package.

3. Assembly according to claim 2, **characterised in that** the assembly comprises a speedometer for determining the peripheral velocity of the engagement position on the carcass (92) and/or that the control device is adapted for calculating the peripheral velocity of the engagement position on the carcass (92) from the number of revolutions of the carcass drum (93) and the distance from the engagement position to the axis of rotation of the carcass drum (93).

4. Assembly according to claim 1, 2 or 3, **characterised in that** the control device is adapted for controlling the peripheral velocity of the stitching roller (2; 22A, 22B) depending on the signal that is representative for the drive torque.

5. Assembly according to any one of the preceding claims, **characterised in that** the assembly comprises a servomotor for rotatingly driving the carcass drum (93) and/or **in that** the drive mechanism (4; 24A, 24B) comprises a servomotor for driving the stitching roller (2; 22A, 22B).

6. Assembly according to any one of the preceding claims, **characterised in that** the stitching roller (22A, 22B) is a dynamic roller following a tyre contour, which roller is movable in a longitudinal direction (X1, X2) with respect to the carcass drum (93).

7. Assembly according to claim 6, **characterised in that** the control device is adapted for controlling a peripheral velocity of the stitching roller (2; 22A, 22B) depending on an engagement position on the carcass with the belt/tread package.

8. Assembly according to claim 6 or 7, **characterised in that** the stitching roller unit (20) comprises one pair of dynamic stitching rollers (22A, 22B) following the tyre contour which rollers (22A, 22B) are movable in longitudinal direction (X1, X2) with respect to the carcass drum (93), wherein each of both stitching rollers (22A, 22B) is provided with its individual drive mechanism (24A, 24B).

9. Assembly according to any one of the preceding claims, **characterised in that** the drive mechanism (4; 22A, 22B) is spaced apart from the stitching roller (2; 22A, 22B), preferably at the side of the stitching roller (2; 22A, 22B) that faces away from the carcass drum (93).

10. Method for manufacturing a green radial pneumatic tyre, comprising the following steps:
arranging a carcass (92) on a rotatable carcass drum (93);
arranging a belt/tread package on the carcass (92);
rotatingly driving the carcass drum (93) with the carcass (92) with the belt/tread package thereon;
moving a stitching roller unit (1; 20) with a rotatable stitching roller (2; 22A, 22B) towards the carcass (92) with the belt/tread package;
stitching the belt/tread package against the carcass by the stitching roller (2; 22A, 22B) while simultaneously rotatingly driving the carcass drum (93);
**characterised in that**, the stitching roller unit (1; 20) is provided with a drive mechanism (4; 24A, 24B) for rotatingly driving a running surface of the stitching roller (2; 22A, 22B), wherein the stitching roller (2; 22A, 22B) is rotatingly driven before the stitching roller (2; 22A, 22B) contacts the belt/tread package, and
**in that** a drive torque for driving the rotatable carcass drum (93) or a quantity derived therefrom is determined, and a signal that is representative for the drive torque is given to a control device for controlling a peripheral velocity of the stitching roller (2; 22A, 22B) and/or the peripheral velocity of the engagement position on the carcass (92) depending on the drive torque for driving the carcass drum (93).

11. Method according to claim 10, **characterised in that** the peripheral velocity of the rotatingly driven stitching roller (2; 22A, 22B) is set depending on the peripheral velocity of an engagement position on the carcass (92) with the belt/tread package, where the stitching roller (2; 22A, 22B) is about to engage or engages.

12. Method according to claim 11, **characterised in that** the control device directs the peripheral velocity of the stitching roller (2; 22A, 22B) and/or the peripheral velocity of the carcass (92) with belt/tread package, at least near the engagement position, to a substantially equal value.

13. Method according to claim 10, **characterised in that** a first drive torque is determined without the stitching roller (2; 22A, 22B) contacting the belt/tread package, that subsequently a second drive torque is determined wherein the stitching roller (2; 22A, 22B) presses against the belt/tread package, and **in that** the control device regulates the peripheral velocity of the stitching roller and/or the peripheral velocity of the carcass (92) with belt/tread package such that the difference between the first and second drive torque becomes minimal.

14. Method according to any one of the claims 10-13, **characterised in that** the stitching roller (22A, 22B) is a dynamic roller following a tyre contour, which roller is moved in a longitudinal direction (X1, X2) with respect to the carcass drum (93).

15. Method according to claim 14, **characterised in that** the control device sets the peripheral velocity of the stitching roller (22A, 22B) depending on the longitudinal movement (X1, X2) of the stitching roller (22A, 22B) with respect to the carcass drum (93).

## Patentansprüche

1. Anordnung zum Herstellen eines radialen Luftreifenrohlings, wobei die Anordnung versehen ist mit einer drehbaren Karkassentrommel (93) zum Tragen einer Karkasse (92) mit einem Gürtel-Laufflächen-Paket für den radialen Luftreifen und mit einer Heftwalzeneinheit (1; 20), die mindestens eine drehbare Heftwalze (2; 22A, 22B) mit einer Heftlauffläche, die gegen der Karkasse (92) angeordnet werden kann, und eine Verlagerungsvorrichtung (52; 28) zum Bewegen der Walze (2; 22A, 22B) radial von der Karkasse (92) mit dem Gürtel-Laufflächen-Paket weg oder zu dieser hin aufweist, **dadurch gekennzeichnet, dass** die Heftwalzeneinheit (1; 20) mit einem eigenen Antriebsmechanismus (4; 24A, 24B) zum drehenden Antreiben der Heftlauffläche der Heftwalze (2; 22A, 22B), mindestens ohne dass die Heftwalze (2; 22A, 22B) das Gürtel-Laufflächen-Paket berührt, versehen ist, wobei die Anordnung versehen ist mit einer Regelungsvorrichtung zum Regeln einer Umfangsgeschwindigkeit der Heftwalze (2; 22A, 22B) und/oder der Umfangsgeschwindigkeit der Eingriffsposition an der Karkasse (92) in Abhängigkeit von einem Antriebsdrehmoment zum Antreiben der Karkassentrommel (93), und wobei die Anordnung Messmittel zum Ermitteln des Antriebsdrehmoments zum Antreiben der drehbaren Karkassentrommel (93) oder einer daraus abgeleiteten Größe und zum Geben eines Signals, das für das Antriebsdrehmoment repräsentativ ist, an die Regelungsvorrichtung umfasst.

2. Anordnung nach Anspruch 1, **dadurch gekennzeichnet, dass** die Regelungsvorrichtung zum Regeln der Umfangsgeschwindigkeit der Heftwalze (2; 22A, 22B) in Abhängigkeit von der Umfangsgeschwindigkeit der Karkasse (92) mit dem Gürtel-Laufflächen-Paket ausgebildet ist.

3. Anordnung nach Anspruch 2, **dadurch gekennzeichnet, dass** die Anordnung einen Geschwindigkeitsmesser zum Ermitteln der Umfangsgeschwindigkeit der Eingriffsposition an der Karkasse (92) umfasst und/oder dass die Regelungsvorrichtung zum Berechnen der Umfangsgeschwindigkeit der Eingriffsposition an der Karkasse (92) aus der Anzahl von Umdrehungen der Karkassentrommel (93) und dem Abstand von der Eingriffsposition zu der Drehachse der Karkassentrommel (93) ausgebildet ist.

4. Anordnung nach Anspruch 1, 2 oder 3, **dadurch gekennzeichnet, dass** die Regelungsvorrichtung zum Regeln der Umfangsgeschwindigkeit der Heftwalze (2; 22A, 22B) in Abhängigkeit von dem Signal, welches für das Antriebsdrehmoment repräsentativ ist, ausgebildet ist.

5. Anordnung nach einem beliebigen der vorhergehenden Ansprüche, **dadurch gekennzeichnet, dass** die Anordnung einen Servomotor zum drehenden Antreiben der Karkassentrommel (93) umfasst und/oder dass der Antriebsmechanismus (4; 24A, 24B) einen Servomotor zum Antreiben der Heftwalze (2; 22A, 22B) umfasst.

6. Anordnung nach einem beliebigen der vorhergehenden Ansprüche, **dadurch gekennzeichnet, dass** die Heftwalze (22A, 22B) eine dynamische Walze ist, welche einer Reifenkontur folgt, wobei die Walze in eine Längsrichtung (X1, X2) in Bezug auf die Karkassentrommel (93) beweglich ist.

7. Anordnung nach Anspruch 6, **dadurch gekennzeichnet, dass** die Regelungsvorrichtung zum Regeln einer Umfangsgeschwindigkeit der Heftwalze (2; 22A, 22B) in Abhängigkeit von einer Eingriffsposition an der Karkasse mit dem Gürtel-Laufflächen-Paket ausgebildet ist.

8. Anordnung nach Anspruch 6 oder 7, **dadurch gekennzeichnet, dass** die Heftwalzeneinheit (20) ein Paar dynamischer Heftwalzen (22A, 22B) umfasst, welche der Reifenkontur folgen, wobei die Walzen (22A, 22B) in der Längsrichtung (X1, X2) in Bezug auf die Karkassentrommel (93) beweglich sind, wobei jede der beiden Heftwalzen (22A, 22B) mit ihrem eigenen Antriebsmechanismus (24A, 24B) versehen ist.

9. Anordnung nach einem beliebigen der vorhergehenden Ansprüche, **dadurch gekennzeichnet, dass** der Antriebsmechanismus (4; 22A, 22B) von der Heftwalze (2; 22A, 22B) beabstandet ist, vorzugsweise auf der Seite der Heftwalze (2; 22A, 22B), welche der Karkassentrommel (93) abgewandt ist.

10. Verfahren zum Herstellen eines radialen Luftreifenrohlings, umfassend folgende Schritte:
Anordnen einer Karkasse (92) auf einer drehbaren Karkassentrommel (93);
Anordnen eines Gürtel-Laufflächen-Pakets auf der Karkasse (92);
drehendes Antreiben der Karkassentrommel (93) mit der Karkasse (92) mit dem Gürtel-Laufflächen-Paket darauf;
Bewegen einer Heftwalzeneinheit (1; 20) mit einer drehbaren Heftwalze (2; 22A, 22B) in Richtung der Karkasse (92) mit dem Gürtel-Laufflächen-Paket;
Heften des Gürtel-Laufflächen-Pakets an die Karkasse mittels der Heftwalze (2; 22A, 22B) bei gleichzeitigem drehenden Antreiben der Karkassentrommel (93);
**dadurch gekennzeichnet, dass** die Heftwalzeneinheit (1; 20) mit einem Antriebsmechanismus (4; 24A, 24B) zum drehenden Antreiben einer Lauffläche der Heftwalze (2; 22A, 22B) versehen ist, wobei die Heftwalze (2; 22A, 22B) drehend angetrieben wird, ehe die Heftwalze (2; 22A, 22B) das Gürtel-Laufflächen-Paket berührt, und
dass ein Antriebsdrehmoment zum Antreiben der drehbaren Karkassentrommel (93) oder eine daraus abgeleitete Größe ermittelt wird und ein Signal, welches für das Antriebsdrehmoment repräsentativ ist, zum Regeln einer Umfangsgeschwindigkeit der Heftwalze (2; 22A, 22B) und/oder der Umfangsgeschwindigkeit der Eingriffsposition an der Karkasse (92) in Abhängigkeit von dem Antriebsdrehmoment zum Antreiben der Karkassentrommel (93) an eine Regelungsvorrichtung gegeben wird.

11. Verfahren nach Anspruch 10, **dadurch gekennzeichnet, dass** die Umfangsgeschwindigkeit der drehend angetriebenen Heftwalze (2; 22A, 22B) in Abhängigkeit von der Umfangsgeschwindigkeit einer Eingriffsposition an der Karkasse (92) mit dem Gürtel-Laufflächen-Paket, wo die Heftwalze (2; 22A, 22B) im Begriff steht, in Eingriff zu gelangen, oder in Eingriff steht, eingestellt wird.

12. Verfahren nach Anspruch 11, **dadurch gekennzeichnet, dass** die Regelungsvorrichtung die Umfangsgeschwindigkeit der Heftwalze (2; 22A, 22B) und/oder die Umfangsgeschwindigkeit der Karkasse (92) mit dem Gürtel-Laufflächen-Paket mindestens nahe der Eingriffsposition auf einen im Wesentlichen gleichen Wert lenkt.

13. Verfahren nach Anspruch 10, **dadurch gekennzeichnet, dass** ein erstes Antriebsdrehmoment ermittelt wird, ohne dass die Heftwalze (2; 22A, 22B) das Gürtel-Laufflächen-Paket berührt, dass in weiterer Folge ein zweites Antriebsdrehmoment ermittelt wird, wobei die Heftwalze (2; 22A, 22B) auf das Gürtel-Laufflächen-Paket drückt, und dass die Regelungsvorrichtung die Umfangsgeschwindigkeit der Heftwalze und/oder die Umfangsgeschwindigkeit der Karkasse (92) mit dem Gürtel-Laufflächen-Paket derart regelt, dass der Unterschied zwischen dem ersten und dem zweiten Antriebsdrehmoment minimal wird.

14. Verfahren nach einem beliebigen der Ansprüche 10-13, **dadurch gekennzeichnet, dass** die Heftwalze (22A, 22B) eine dynamische Walze ist, die einer Reifenkontur folgt, wobei die Walze in eine Längsrichtung (X1, X2) in Bezug auf die Karkassentrommel (93) bewegt wird.

15. Verfahren nach Anspruch 14, **dadurch gekennzeichnet, dass** die Regelungsvorrichtung die Umfangsgeschwindigkeit der Heftwalze (22A, 22B) in Abhängigkeit von der Längsbewegung (X1, X2) der Heftwalze (22A, 22B) in Bezug auf die Karkassentrommel (93) einstellt.

## Revendications

1. Ensemble pour fabriquer un pneumatique radial non vulcanisé, lequel ensemble est prévu avec un tambour de carcasse rotatif (93) pour porter une carcasse (92) avec un ensemble de ceinture/bande de roulement pour le pneumatique radial et avec une unité de rouleau de couture (1; 20) ayant au moins un rouleau de couture rotatif (2 ; 22A, 22B) ayant une surface de roulement de couture qui peut être placée contre la carcasse (92) et un dispositif de déplacement (52 ; 28) pour déplacer le rouleau (2 ; 22A, 22B) radialement à partir de ou vers la carcasse (92) avec l'ensemble de ceinture/bande de roulement, **caractérisé en ce que** l'unité de rouleau de couture (1 ; 20) est prévue avec un mécanisme d'entraînement individuel (4 ; 24A, 24B) pour entraîner de manière rotative la surface de roulement de couture du rouleau de couture (2 ; 22A, 22B), au moins sans que le rouleau de couture (2 ; 22A, 22B) ne soit en contact avec l'ensemble de ceinture/bande de roulement, dans lequel l'ensemble est prévu avec un dispositif de commande pour commander une vitesse périphérique du rouleau de couture (2 ; 22A, 22B) et/ou la vitesse périphérique de la position de mise en prise sur la carcasse (92) en fonction d'un couple d'entraînement pour entraîner le tambour de carcasse (93), et dans lequel l'ensemble comprend des moyens de mesure afin de déterminer un couple d'entraînement pour entraîner le tambour de carcasse rotatif (93) ou une quantité dérivée de ce dernier, et pour donner un signal qui est représentatif du couple d'entraînement au dispositif de commande.

2. Ensemble selon la revendication 1, **caractérisé en ce que** le dispositif de commande est adapté pour commander la vitesse périphérique du rouleau de couture (2 ; 22A, 22B) en fonction de la vitesse périphérique de la carcasse (92) avec l'ensemble de ceinture/bande de roulement.

3. Ensemble selon la revendication 2, **caractérisé en ce que** l'ensemble comprend un compteur de vitesse pour déterminer la vitesse périphérique de la position de mise en prise sur la carcasse (92) et/ou **en ce que** le dispositif de commande est adapté pour calculer la vitesse périphérique de la position de mise en prise sur la carcasse (92) à partir du nombre de tours du tambour de carcasse (93) et la distance de la position de mise en prise à l'axe de rotation du tambour de carcasse (93).

4. Ensemble selon la revendication 1, 2 ou 3, **caractérisé en ce que** le dispositif de commande est adapté pour commander la vitesse périphérique du rouleau de couture (2 ; 22A, 22B) en fonction du signal qui est représentatif pour le couple d'entraînement.

5. Ensemble selon l'une quelconque des revendications précédentes, **caractérisé en ce que** l'ensemble comprend un servomoteur pour entraîner en rotation le tambour de carcasse (93) et/ou **en ce que** le mécanisme d'entraînement (4 ; 24A, 24B) comprend un servomoteur pour entraîner le rouleau de couture (2 ; 22A, 22B).

6. Ensemble selon l'une quelconque des revendications précédentes, **caractérisé en ce que** le rouleau de couture (22A, 22B) est un rouleau dynamique suivant un contour de pneu, lequel rouleau est mobile dans une direction longitudinale (X1, X2) par rapport au tambour de carcasse (93).

7. Ensemble selon la revendication 6, **caractérisé en ce que** le dispositif de commande est adapté pour commander une vitesse périphérique du rouleau de couture (2 ; 22A, 22B) en fonction d'une position de mise en prise sur la carcasse avec l'ensemble de ceinture/bande de roulement.

8. Ensemble selon la revendication 6 ou 7, **caractérisé en ce que** l'unité de rouleau de couture (20) comprend une paire de rouleaux de couture dynamiques (22A, 22B) suivant le contour de pneu, lesquels rouleaux (22A, 22B) sont mobiles dans la direction longitudinale (X1, X2) par rapport au tambour de carcasse (93), dans lequel chacun des deux rouleaux de couture (22A, 22B) est prévu avec son mécanisme d'entraînement (24A, 24B) individuel.

9. Ensemble selon l'une quelconque des revendications précédentes, **caractérisé en ce que** le mécanisme d'entraînement (4 ; 22A, 22B) est éloigné du rouleau de couture (2 ; 22A, 22B), de préférence du côté du rouleau de couture (2 ; 22A, 22B) qui est orienté à l'opposé du tambour de carcasse (93).

10. Procédé pour fabriquer un pneumatique radial non vulcanisé, comprenant les étapes suivantes consistant à :
agencer une carcasse (92) sur un tambour de carcasse rotatif (93) ;
agencer un ensemble de ceinture/bande de roulement sur la carcasse (92) ;
entraîner en rotation le tambour de carcasse (93) avec la carcasse (92) avec l'ensemble de ceinture/bande de roulement sur cette dernière ;
déplacer une unité de rouleau de couture (1 ; 20) avec un rouleau de couture rotatif (2 ; 22A, 22B) vers la carcasse (92) avec l'ensemble de ceinture/bande de roulement ;
coudre l'ensemble de ceinture/bande de roulement contre la carcasse grâce au rouleau de couture (2 ; 22A, 22B) tout en entraînant simultanément en rotation le tambour de carcasse (93) ;
**caractérisé en ce que** l'unité de rouleau de couture (1 ; 20) est prévu avec un mécanisme d'entraînement (4 ; 24A, 24B) pour entraîner en rotation une surface de roulement du rouleau de couture (2 ; 22A, 22B), dans lequel le rouleau de couture (2 ; 22A, 22B) est entraîné en rotation avant que le rouleau de couture (2 ; 22A, 22B) ne soit en contact avec l'ensemble de ceinture/bande de roulement, et
**en ce qu'**un couple d'entraînement pour entraîner le tambour de carcasse rotatif (93) ou une quantité dérivée de ce dernier est déterminé, et un signal qui est représentatif pour le couple d'entraînement est donné à un dispositif de commande pour commander une vitesse périphérique du rouleau de couture (2 ; 22A, 22B) et/ou la vitesse périphérique de la position de mise en prise sur la carcasse (92) en fonction du couple d'entraînement pour entraîner le tambour de carcasse (93).

11. Procédé selon la revendication 10, **caractérisé en ce que** la vitesse périphérique du rouleau de couture entraîné en rotation (2 ; 22A, 22B) est déterminée en fonction de la vitesse périphérique d'une position de mise en prise sur la carcasse (92) avec l'ensemble de ceinture/bande de roulement, dans lequel le rouleau de couture (2 ; 22A, 22B) est sur le point de se mettre en prise ou se met en prise.

12. Ensemble selon la revendication 11, **caractérisé en ce que** le dispositif de commande dirige la vitesse périphérique du rouleau de couture (2 ; 22A, 22B) et/ou la vitesse périphérique de la carcasse (92) avec l'ensemble de ceinture/bande de roulement, au moins à proximité de la position de mise en prise, vers une valeur sensiblement identique.

13. Ensemble selon la revendication 10, **caractérisé en ce qu'**un premier couple d'entraînement est déterminé sans que le rouleau de couture (2 ; 22A, 22B) ne soit en contact avec l'ensemble de ceinture/bande de roulement, **en ce que** successivement un second couple d'entraînement est déterminé, dans lequel le rouleau de couture (2 ; 22A, 22B) appuie contre l'ensemble de ceinture/bande de roulement, et **en ce que** le dispositif de commande régule la vitesse périphérique du rouleau de couture et/ou la vitesse périphérique de la carcasse (92) avec l'ensemble de ceinture/bande de roulement de sorte que la différence entre le premier et le second couple d'entraînement devient minime.

14. Procédé selon l'une quelconque des revendications 10 à 13, **caractérisé en ce que** le rouleau de couture (22A, 22B) est un rouleau dynamique suivant un contour de pneu, lequel rouleau est déplacé dans une direction longitudinale (X1, X2) par rapport au tambour de carcasse (93).

15. Procédé selon la revendication 14, **caractérisé en ce que** le dispositif de commande détermine la vitesse périphérique du rouleau de couture (22A, 22B) en fonction du mouvement longitudinal (X1, X2) du rouleau de couture (22A, 22B) par rapport au tambour de carcasse (93).
